(19) **Europäisches Patentamt / European Patent Office / Office européen des brevets**

(11) **EP 2 041 445 B1**

(12) **EUROPÄISCHE PATENTSCHRIFT**

(45) Veröffentlichungstag und Bekanntmachung des Hinweises auf die Patenterteilung:
**23.12.2009 Patentblatt 2009/52**

(21) Anmeldenummer: **07786050.0**

(22) Anmeldetag: **13.07.2007**

(51) Int Cl.:
***F16D 33/20*** *(2006.01)*

(86) Internationale Anmeldenummer:
**PCT/EP2007/006222**

(87) Internationale Veröffentlichungsnummer:
**WO 2008/006598 (17.01.2008 Gazette 2008/03)**

(54) **FÜLLUNGSGESTEUERTE HYDRODYNAMISCHE KUPPLUNG UND VERFAHREN ZUM BETRIEB DERSELBEN**

FILLING-CONTROLLED HYDRODYNAMIC COUPLING AND METHOD FOR OPERATING THE SAME

ACCOUPLEMENT HYDRODYNAMIQUE COMMANDÉ PAR REMPLISSAGE, ET PROCÉDÉ PERMETTANT DE LE FAIRE FONCTIONNER

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **14.07.2006 DE 102006033093**

(43) Veröffentlichungstag der Anmeldung:
**01.04.2009 Patentblatt 2009/14**

(73) Patentinhaber: **Voith Turbo GmbH & Co. KG 89522 Heidenheim (DE)**

(72) Erfinder:
• **STOLZ, Tobias 74589 Satteldorf (DE)**

• **HOFMANN, Karl-Heinz 74599 Wallhausen (DE)**
• **BASTECK, Andreas 79540 Lörrach (DE)**

(74) Vertreter: **Dr. Weitzel & Partner Friedenstraße 10 89522 Heidenheim (DE)**

(56) Entgegenhaltungen:
WO-A-2004/042255 DE-A1- 10 353 518
FR-E- 82 649 NL-A- 6 511 365
NL-A- 6 613 319 NL-C- 130 141
US-A- 2 409 593 US-A- 2 635 429

EP 2 041 445 B1

**Beschreibung**

Die Erfindung betrifft eine füllungsgesteuerte hydrodynamische Kupplung, wobei die füllungsgesteuerte hydrodynamische Kupplung die Merkmale aus dem Oberbegriff des Anspruchs 1 aufweist.

Hydrodynamische Kupplungen sind in vielzähligen Ausgestaltungen bekannt, hierzu wird beispielsweise auf die Veröffentlichung J. M. Voith GmbH: "Hydrodynamik in der Antriebstechnik"; Vereinigte Fachverlage Krauskopf Ingenieur Digest - Mainz 1987 verwiesen. Das Dokument NL-A-6613319 wird als nächstliegender Stand der Technik angesehen.

Hydrodynamische Kupplungen umfassen wenigstens ein Primärrad 2, das als Pumpenrad dient, und wenigstens ein Sekundärrad 3, auf welches als Turbinenrad der Momentenübertrag erfolgt. Die hydrodynamische Kupplung dient lediglich der Drehzahlwandlung und ist frei von einem Leitrad. Das Primärrad 2 und das Sekundärrad 3 sind koaxial zueinander angeordnet und bilden so einen torusförmigen Arbeitsraum. Wird dieser Arbeitsraum mit einem Betriebsmittel, etwa Öl oder Wasser, befüllt, so wird beim Antrieb des Primärrads 2 das im Arbeitsraum befindliche Betriebsmittel als Toroidströmung umgewälzt, wodurch die vom Primärrad 2 erzeugte Betriebsmittelströmung ein Reaktionsmoment auf das Sekundärrad 3 überträgt, das aufgrund des Momentengleichgewichts dem vom Primärrad 2 aufgebrachten Moment entspricht. Konstruktionsbedingt ist hierfür ein bestimmter Schlupf, das heißt eine von der Drehzahl des Primärrades 2 abweichende Drehzahl für das Sekundärrad 3 notwendig. Hierbei kann das von der hydrodynamischen Kupplung übertragene Moment in Abhängigkeit des Schlupfs in einem Kennlinienfeld für die Leistungszahlen $\lambda$ ermittelt werden. Die Leistungszahl $\lambda$ hängt hierbei invers von der fünften Potenz des Durchmessers des Arbeitsraums ab, so dass zur Übertragung hoher Momente durch die hydrodynamische Kupplung diese großbauend auszugestalten ist.

Für den Fall einer füllungsgesteuerten hydrodynamischen Kupplung wird durch die Wahl des Füllstands des Betriebsmediums im Arbeitsraum ein bestimmter Leistungszahlverlauf im Verhältnis zum Schlupf und damit eine bestimmte Paarung aus abtriebsseitigem Moment und abtriebsseitiger Drehzahl bei einer konstanten Drehzahlvorgabe auf der Antriebsseite ausgewählt.

Damit ist es mit füllungsgesteuerten hydrodynamischen Kupplungen möglich, eine Antriebsmaschine mit konstanter Drehzahl mit einer Arbeitsmaschine zu verbinden, für die ein variables Moment sowie eine variable Drehzahl einzustellen ist. Dies wird durch eine Regelung des Füllstands im Arbeitsraum mit Betriebsmittel bewirkt, wobei meist bevorzugt wird, den Ablauf des Betriebsmittels aus dem Arbeitsraum heraus zu steuern. Für den Aufbau und die Betriebsweise einer füllungsgesteuerten hydrodynamischen Kupplung wird beispielhaft auf die DE 197 06 652 A1 verwiesen.

Beim Betrieb füllungsgesteuerter hydrodynamischer Kupplungen treten bei Teilfüllung für hinreichend hohe Leistungszahlen Kennliniensprünge auf. Hierunter werden Instabilitäten verstanden, bei denen das abtriebsseitige Moment und die zugehörige Drehzahl der Abtriebswelle sprunghaft ansteigen beziehungsweise abfallen, wenn kleinere Veränderungen am Füllstand zur Korrektur des abtriebs/antriebsseitigen Drehzahlverhältnisses (Schlupf) sowie des abtriebsseitigen Moments vorgenommen werden. In einem Kennlinienfeld für die Leistungszahlen stellen sich diese Instabilitäten als Kennliniensprünge dar, das heißt ausgehend von einem gewählten Füllstand kann einem bestimmten Schlupf keine eindeutige Leistungszahl $\lambda$ zugeordnet werden. Als weiterer nachteiliger Effekt kann bei höheren Leistungszahlen $\lambda$ eine Hysterese auftreten, das heißt der Leistungszahlverlauf bei einer Zunahme des Schlupfs entspricht nicht jenem der Abnahme des Schlupfs. Zur Vermeidung dieser unerwünschten Instabilitäten beziehungsweise Hystereseeffekte wird im Stand der Technik der nutzbare Bereich für die Leistungszahl $\lambda$ auf einen bestimmten Wert beschränkt, welcher von den $\lambda$-Werten, bei denen Instabilitäten beziehungsweise Hystereseeffekte auftreten, beabstandet ist. Diese Maßnahme führt zwar zu einem stabilen und regelbaren Betrieb der füllungsgesteuerten hydrodynamischen Kupplung, allerdings folgt hieraus der Nachteil, dass die Limitierung der Leistungszahlen zu großbauenden hydrodynamischen Kupplungen führt, um eine hinreichend hohe Momentenübertragung sicherzustellen.

Unstetigkeitsbereiche im Kennfeld der Leistungsübertragung im Teilfüllungszustand sind für hydrodynamische Kupplungen als Bestandteil einer Anfahreinheit aus der DE 102 51 970 A1 bekannt. In dieser Schrift wird vorgeschlagen, die Unstetigkeitsbereiche dadurch zu vermeiden, dass eine unregelmäßige Schaufelaufteilung gewählt wird, das heißt in Umfangsrichtung gesehen wird das Schaufelrad in mehrere Sektoren unterteilt, wobei die einzelnen, benachbart angeordneten Schaufeln, innerhalb eines Sektors in unterschiedlichen Winkeln zueinander angeordnet sind. Eine solche Ausgestaltung ist jedoch konstruktiv aufwendig und fertigungstechnisch schwierig zu realisieren.

Der Erfindung liegt die Aufgabe zugrunde, füllungsgesteuerte hydrodynamische Kupplungen möglichst kleinbauend auszubilden und in einem möglichst weiten Bereich, das heißt für möglichst hohe Leistungszahlen zu betreiben und dabei gleichzeitig einen stabilen Betrieb frei von Momentensprüngen und Hystereseeffekten sicherzustellen.

Zur Lösung der Aufgabe haben die Erfinder erkannt, dass durch eine asymmetrische Gestaltung des Profils der Kupplung, das heißt eine von der Ausformung des Primärrades 2 abweichende Gestaltung des Sekundärrades 3, eine Verschiebung der Kennlinieninstabilitäten und Hystereseeffekte resultiert. Verschoben werden die unerwünschten Momentsprünge in einen Bereich höherer $\lambda$-Werte. Durch eine solchermaßen ausgestaltete Geometrie der hydrodynamischen Kupplung ist es folglich möglich, im Bereich höherer Kennzahlen eine Einstellung des abtriebsseitigen Moments und der gewünschten Drehzahl zu realisieren, ohne in den unerwünschten Instabilitätsbereich zu gelangen. Statt der üblicherweise verwendeten Kennzahlen λ < 1,8 kann nun für eine erfindungsgemäß ausgestaltete hydrodynamische Kupplung eine obere Grenze für die Kennzahl von λ wenigstens 2 verwendet werden, ohne dass Momentensprünge zur Arbeitsmaschine, die im parabolischen Betrieb angetrieben wird, übertragen werden. Als unmittelbare Folge ist es möglich, eine erfindungsgemäße Kupplung kleinbauend auszubilden, da auch bei einem beschränkten Radius noch ein hinreichendes Moment aufgrund der höheren Kennzahlen übertragbar ist.

Eine Realisierung eines asymmetrischen Designs wird bei Betrachtung eines Axialschnitts durch eine erfindungsgemäße hydrodynamische Kupplung ersichtlich. Wird hierbei dem vom Primärrad 2 gebildeten Teilbereich des Arbeitsraums eine maximale axiale Erstreckung $B_P$ sowie ein Außendurchmesser $DA_P$ und ein entsprechender Innendurchmesser $DI_P$ zugeordnet und mit den entsprechenden Werten für das Sekundärrad 3 verglichen, das heißt $B_T$ für die maximale axiale Erstreckung des vom Sekundärrad 3 gebildeten Teilbereichs des Arbeitsraums sowie $DA_T$ für den Außendurchmesser und $DI_T$ für den Innendurchmesser desselben, so wird die erfindungsgemäße Kupplung vorzugsweise eines oder eine Kombination nachfolgender Merkmale aufweisen:

- $B_T < B_P$, das heißt das Sekundärrad 3 ist gegenüber dem Primärrad 2 in axialer Richtung schlanker bauend ausgebildet,

- $DI_T > DI_P$, das heißt der Innendurchmesser des Sekundärrads 3 ist größer gewählt als jener des Primärrades 2, wobei die Außendurchmesser $DA_P$ und $DA_T$ jeweils für das Primärrad 2 und das Sekundärrad 3 annähernd gleich gewählt sind. Hieraus folgt, dass der durch das Primärrad 2 begrenzte Teilbereich des Arbeitsraums in radialer Erstreckung vorzugsweise größer ist als der durch das Sekundärrad 3 gebildete Teilbereich.

Gemäß einer weiteren Ausgestaltung ist wiederum im Axialschnitt betrachtet der Profilverlauf des Sekundärrads 3 gegenüber dem Pumpenrad abweichend gestaltet, das heißt werden die jeweiligen Axialschnitte für das Primär- und das Sekundärrad 3 und damit die durch diese gebildeten Teilbereiche des Arbeitsraums aufeinander abgebildet, so sind diese erfindungsgemäß nicht deckungsgleich.

Eine weitere Maßnahme, welche wiederum für sich oder in Kombination mit den voranstehend beschriebenen Ausgestaltungen zur Erzielung eines asymmetrischen Profils verwendet werden kann, besteht darin, für das Sekundärrad 3 zusätzliche Leitflächen vorzusehen, die sich vom Torusgrund zum Innendurchmesser hin erstrecken. Diese Ausführung kann durch eine zylindrische Auffüllung im Bereich des Innendurchmessers des Sekundärrads 3 erzielt werden.

Gemäß einer weiteren Ausgestaltung der Erfindung wird dadurch eine Asymmetrie zwischen Primärrad 2 und Sekundärrad 3 erzielt, indem im Torusgrund des Sekundärrads 3 Störkanten angebracht werden. Diese stellen Erhebungen dar, welche entweder einteilig mit dem Torusgrund ausgebildet, beispielsweise angegossen werden können, oder die Störkante bildet ein separates Element, welches mit dem Torusgrund verschraubt ist. Besonders bevorzugt wird die Verwendung einer Vielzahl von Störkanten, welche auf unterschiedliche Durchmesserbereiche verteilt sind, so dass zusätzlich zur Asymmetrie zwischen Primärrad 2 und Sekundärrad 3 auch in Umfangsrichtung am Sekundärrad 3 asymmetrische Strömungsverhältnisse vorliegen. Die Störkanten werden in einer vorteilhaften Ausgestaltung in Kombination mit den voranstehend beschriebenen Maßnahmen zur Erzielung einer asymmetrischen Kupplung verwendet.

Die Beschaufelung der Kupplung kann gerade oder mit Schrägstellung ausgebildet sein. Vorzugsweise weisen das Primärrad 2 und das Sekundärrad 3 jeweils übereinstimmende Schaufelwinkel auf und können im Bereich des Schaufelendes unter Bildung einer Anspitzfläche angefast sein. Weiterhin ist es möglich, die Beschaufelung des Primärrads 2 und/oder des Sekundärrades 3 in Umfangsrichtung mit Variationen, etwa der Winkelstellung oder bezüglich der Anordnungsabstände, das heißt für die den Einzelschaufeln zugeordneten Bogenmaße, als nicht konstant auszuformen.

Nachfolgend wird die Erfindung anhand von Figuren genauer beschrieben. Hierin ist im Einzelnen Folgendes dargestellt:

Figur 1   zeigt eine erfindungsgemäß asymmetrisch profilierte hydrodynamische Kupplung mit einem im Vergleich zum Primärrad 2 schmäler gestalteten Sekundärrad 3.

Figur 2   zeigt eine erfindungsgemäß asymmetrisch gestaltete hydrodynamische Kupplung entsprechend zu Figur 1, die zusätzlich eine verringerte radiale Erstrekkung für das Sekundärrad 3 im Vergleich zum Primärrad 2 aufweist.

Figur 3   zeigt eine erfindungsgemäß asymmetrisch gestaltete hydrodynamische Kupplung entsprechend zu Figur 1, die zusätzlich eine zylindrische Auffüllung im Bereich des Innendurchmessers am Sekundärrad 3 aufweist.

Figur 4   zeigt eine Weitergestaltung der Ausführungsform aus Figur 3.

Figur 5   stellt eine Ausführungsform der Erfindung mit Störkanten im Torusgrund des Sekundärrads 3 in axialer Draufsicht gesehen dar.

Figur 6    stellt die Ausführungsform aus Figur 5 als Axialschnitt dar.

Figur 7    stellt ein Kennlinienfeld für die Leistungszahl λ für eine erfindungsgemäß ausgebildete hydrodynamische Kupplung dar.

Figur 8    zeigt ein Kennlinienfeld der Leistungszahl λ für unterschiedliche Befüllungen des Arbeitsraums in Abhängigkeit des Schlupfs für eine dem Stand der Technik entsprechende hydrodynamische Kupplung.

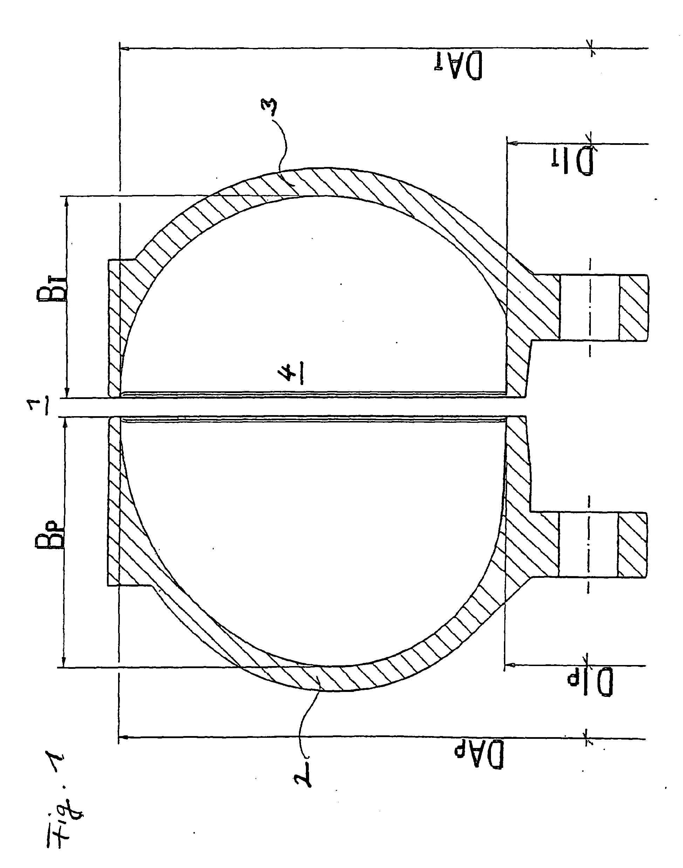

Figur 1 zeigt in schematischer Vereinfachung eine hydrodynamische Kupplung 1, umfassend ein Primärrad 2 und ein Sekundärrad 3. Das Primärrad 2 wird wenigstens mittelbar von einer, im Einzelnen nicht dargestellten Antriebsmaschine angetrieben. Entsprechend steht das Sekundärrad 3 in wenigstens mittelbarer Verbindung zu einer ebenfalls in Figur 1 nicht näher dargestellten Abtriebswelle. Das Primärrad 2 und das Sekundärrad 3 sind koaxial zueinander angeordnet und bilden einen torusförmigen Arbeitsraum 4, der zur Momentübertragung mit einer bestimmten Menge an Betriebsmedium befüllt werden kann. Der Füllungsgrad ist hierbei geregelt, um zu einer füllungsgesteuerten hydrodynamischen Kupplung zu kommen, die es erlaubt, ausgehend von einer konstanten Antriebsdrehzahl einen bestimmten Schlupf und damit eine bestimmte Drehzahl für das Sekundärrad 3 einzustellen und ein bestimmtes Moment an eine abtriebsseitig angeordnete Arbeitsmaschine zu übertragen.

Zur Einstellung eines bestimmten Füllungsgrades des Arbeitsraums mit Betriebsmedium sind weitere Einrichtungen vorgesehen. Diese sind bekannt und können im Rahmen des fachmännischen Könnens ausgestaltet sein. So ist es denkbar, entweder die Zufuhr oder die Abfuhr des Betriebsmittels zum oder aus dem Arbeitsraum 4 über eine Steuervorrichtung, wie ein Steuerventil zu steuern oder zu regeln. Weitere Maßnahmen bestehen in der Verwendung eines Schöpfrohres mit einstellbarer Lage der dem Schöpfrohr zugeordneten Öffnung im Arbeitsraum der hydrodynamischen Kupplung. Im Einzelnen sind diese dem Stand der Technik entsprechenden konstruktiven Ausgestaltungen nicht in der schematischen Darstellung von Figur 1 abgebildet.

Entsprechend einer vorteilhaften Ausgestaltung ist wie in Figur 1 gezeigt das Sekundärrad 3 bezüglich der Erstreckung in axialer Richtung schmäler ausgebildet als das Primärrad 2. Hierbei wird unter axialer Erstreckung in axialer Richtung die Tiefe des vom Primärrad 2 beziehungsweise des vom Sekundärrad 3 gebildeten Teilbereichs des Arbeitsraums angesehen. In Figur 1 steht hierfür für das Primärrad 2 die Bezeichnung $B_P$ und entsprechend für das Sekundärrad 3 die Bezeichnung $B_T$.

Die schematisch in Figur 1 dargestellte erfindungsgemäße Kupplung weist gemäß eines ersten Ausführungsbeispiels folgende, die Asymmetrie kennzeichnende Baugrößen auf:

$B_P$ = 76,5 mm
$B_T$ = 63,5 mm
$DI_P$ = 255,2 mm
$DI_T$ = 259 mm
$DA_P$ = 487,1 mm
$DA_T$ = 487,9 mm

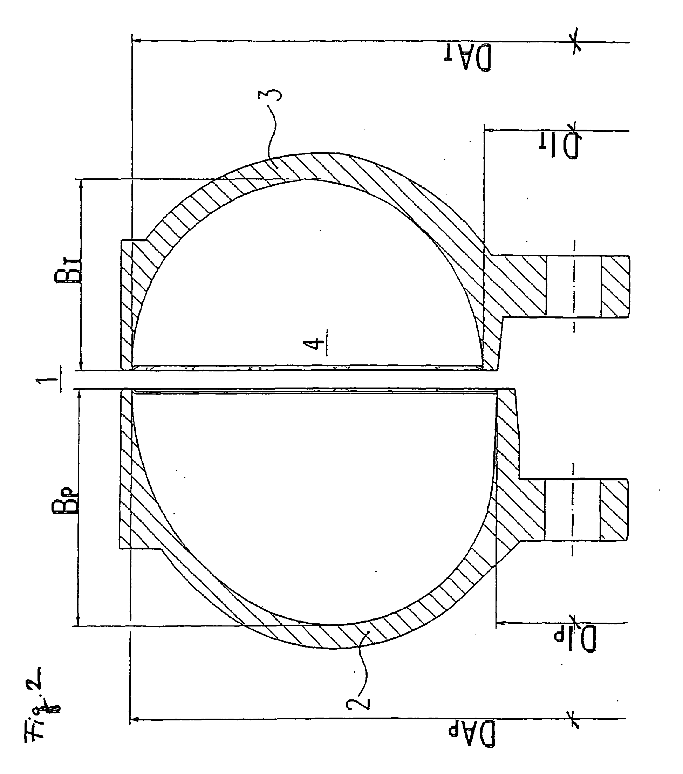

Weiterhin ist aus der in Figur 2 gezeigten Weitergestaltung ersichtlich, dass der dem Sekundärrad 3 zugeordnete Innendurchmesser $DI_T$ zur Realisierung einer Asymmetrie größer gewählt ist als jener des Primärrades 2, der mit dem Bezugszeichen $DI_P$ versehen ist. Gemäß der vorliegenden bevorzugten Ausgestaltung sind die jeweiligen Außenradien - $D_P$ für das Primärrad 2 und $D_T$ für das Sekundärrad 3 - im Wesentlichen gleich, wodurch ein in radialer Richtung verkleinerter Teilarbeitsraum für das Sekundärrad 3 im Vergleich zum Primärrad 2 folgt.

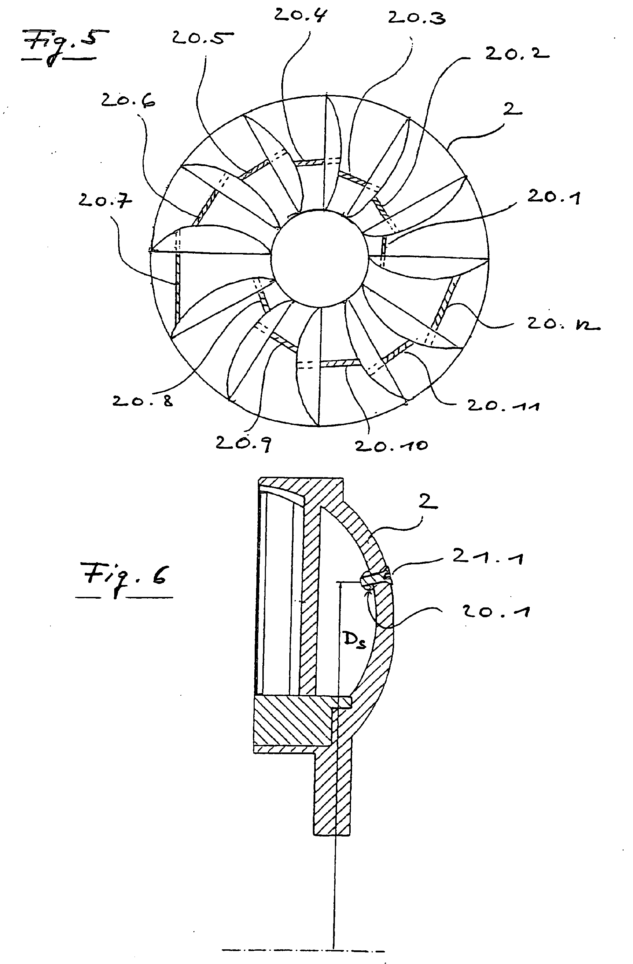

Eine weitere Ausgestaltung der Erfindung ist in den Figuren 5 und 6 dargestellt. Hierbei weist das Sekundärrad 3 im Torusgrund jeweils zwischen zwei aufeinanderfolgenden Schaufeln längliche Erhebungen auf, die als Störkanten wirken. Diese sind in Figur 5, die eine axiale Draufsicht auf das Sekundärrad 3 zeigt, mit den fortlaufenden Bezugszeichen 20.1 - 20.n bezeichnet. Diese Störkanten können mit dem Sekundärrad 3 einteilig ausgeführt sein, das heißt sie können in Form einer Auswölbung im Torusgrund angegossen sein. Ferner ist es denkbar, eine mehrteilige Ausführung zu wählen, wobei die Störkanten als separate Elemente durch Befestigungsmittel, beispielsweise eine Schraubverbindung 21.1 mit dem Sekundärrad 3 2 verbunden sind. Besonders bevorzugt wird eine Vielzahl solcher Störkanten 20.1- 20.n in Verbindung mit einer Verteilungsvariation auf unterschiedliche Durchmesserbereiche, das heißt der Abstand der Mittelpunkte der Störkanten 20.1 - 20.n zur Drehachse - siehe das Bezugszeichen Ds in Figur 6 - variiert zwischen den einzelnen Schaufelzwischenbereichen. Aus dieser Verteilung auf unterschiedliche Durchmesserbereiche kann beispielsweise eine Anordnung resultieren, wie sie in der Axialschnittdarstellung von Figur 5 gezeigt ist. Demnach besteht eine erste Ausgestaltung in einer spiralförmigen Anordnung der Störkanten in Draufsicht auf das Sekundärrad 3 gesehen. Ferner ist es denkbar, die Störkanten willkürlich auf unterschiedliche Durchmesser zu verteilen, wobei bevorzugt wird, dass in Umfangsrichtung gesehen die Konfiguration für die aufeinanderfolgenden Schaufeln variiert. Ferner können die Störkanten sektorweise positioniert sein oder die Verteilung der Störkanten ist auf einzelne und nicht auf alle Zwischenschaufelbereiche begrenzt. Ferner ist es denkbar für einen einzelnen Schaufelzwischenbereich mehrere Störkanten zu verwenden und die Anzahl und/oder die Gestaltung der Störkanten je Schaufelzwischenraum in Umfangsrichtung zu variieren.

Nachfolgend werden bevorzugte Größenverhältnisse zur Kennzeichnung der Asymmetrie von Primär- zu Sekundärrad 3 genannt:

- für das Verhältnis der axialen Erstreckung $B_P$ des durch das Primärrad 2 gebildeten Teilbereichs des Arbeitsraums zur entsprechenden axialen Erstreckung $B_T$ für das Sekundärrad 3 wird $B_P/B_T > 1$, besonders $B_P/B_T > 1,1$ und insbesondere $B_P/B_T > 1,2$ bevorzugt.

- für das Verhältnis des Innendruchmessers $DI_P$ für das Primärrad 2 zum Innendurchmesser $DI_T$ des Sekundärrad 3s 3 wird $DI_P / DI_T < 1$, besonders $DI_P/DI_T < 0,9$ und insbesondere $DI_P/DI_T < 0,85$ bevorzugt. Hierbei werden die Außendurchmesser $DA_P$ und $DA_T$ für das Primärrad 2 und das Sekundärrad 3 bevorzugt annähernd gleich gewählt. Liegen abweichende Außendurchmesser vor, so ist für eine bevorzugte Ausgestaltung diese Abweichung kleiner zu wählen als die Differenz der jeweiligen Innendruchmesser, so dass ein gegenüber dem Primärrad 2 radial kleinerbauendes Sekundärrad 3 resultiert.

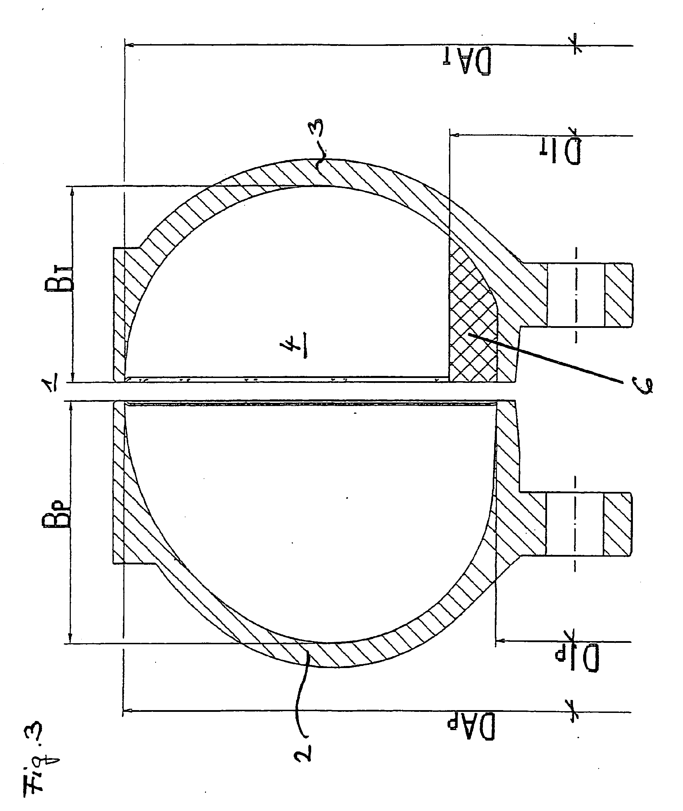

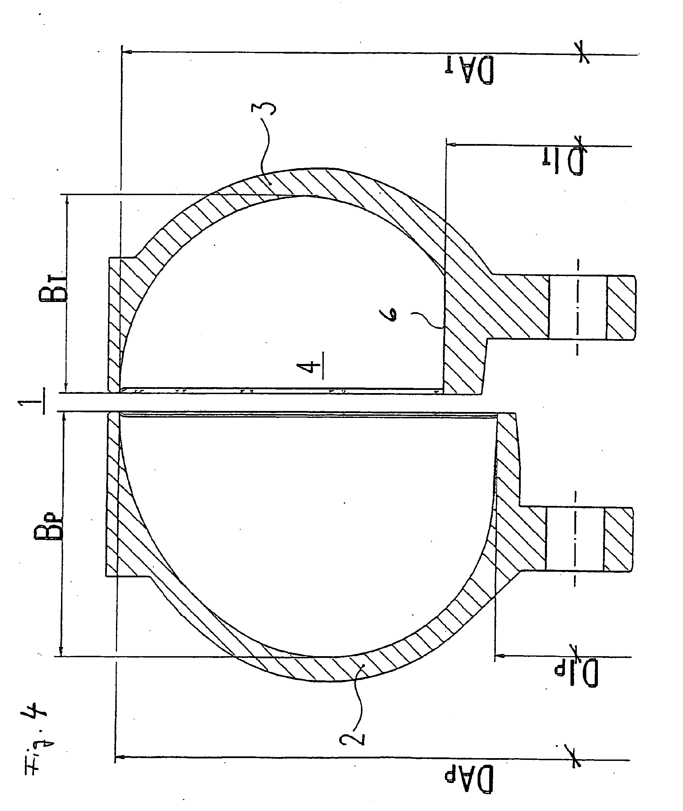

In Figur 3 ist eine erfindungsgemäße Ausführung gezeigt, die eine zylindrische Auffüllung 5 im achsnahen Bereich des Sekundärrads 3 aufweist, so dass ein vergrößerter effektiver Innenradius $DI_T$ resultiert. Anstatt einer solchen zylindrischen Auffüllung 5 kann entsprechend der in Figur 4 gezeigten Ausgestaltung das Grundprofil des Sekundärrads 3 im achsnahen Bereich eine den Innendurchmesser $DI_T$ vergrößernde Leitfläche 6 aufweisen, so dass gegenüber dem Primärrad 2 die gewünschte asymmetrische Profilierung entsteht.

Zusätzlich kann zur weiteren Verbesserung der Kennlinienstabilität entsprechend Figur 4 im Sekundärrad 3 eine Störkante ausgeführt werden mit

- Variation der Anzahl und Verteilung
- Verteilt auf verschiedene Durchmesserbereiche.

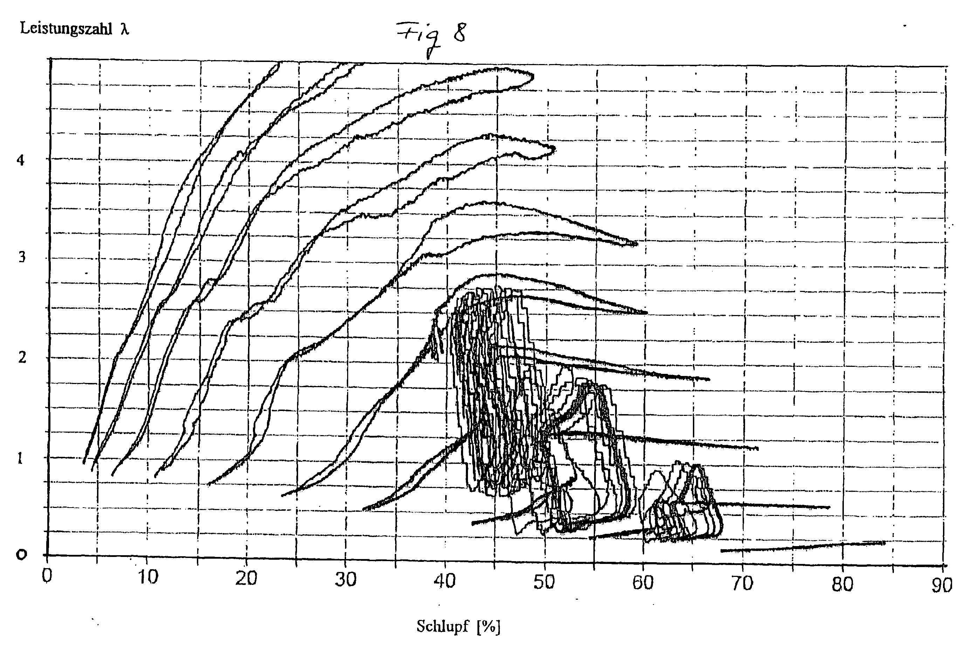

In Figur 8 ist das Kennlinienfeld einer dem Stand der Technik entsprechenden füllungsgesteuerten hydrodynamischen Kupplung wiedergeben. Im Einzelnen sind unterschiedliche Kennlinienverläufe für die Leistungszahl λ in Abhängigkeit des Schlupfes, das heißt dem Verhältnis der Drehzahlen von Primär- zu Sekundärrad 3, dargestellt, welche jeweils unterschiedlichen Füllungsgraden für das Betriebsmedium im Arbeitsraum zugeordnet sind. Exemplarisch sind für Kennlinienverläufe, die einem ersten und einem zweiten Füllungsgrad entsprechen, die Bezugsziffern 7 und 8 zugeordnet.

Hierbei ist die Leistungszahl λ wie folgt definiert:

$$\lambda = \frac{M_P}{\rho \cdot D^5 \cdot \Omega_P^2},$$

wobei $M_P$ das Drehmoment des Pumpenrads, ρ die Dichte des Arbeitsmediums, D den Kreislaufdurchmesser und $\Omega_P$ die Winkelgeschwindigkeit des Primärrads 2 darstellen.

Wie aus Figur 8 ersichtlich, tritt für die Kennlinie 7 mit einem Anstieg des Schlupfes und damit der Leistungszahl λ ein Hystereseeffekt 7.1 auf. Ausgehend von einer Zunahme des Schlupfs wird bei einer nachfolgenden Abnahme des Schlupfs nicht mehr der ursprüngliche Kennlinienverlauf vorliegen. Dies ist für die Realisierung einer Steuerung beziehungsweise Regelung zur Einstellung eines bestimmten abtriebsseitigen Drehmoments und einer zugeordneten Drehzahl problematisch, so dass in der Praxis nur kleine Leistungszahlen λ verwendet werden, für die die Hystereseeffekte noch nicht deutlich ausgeprägt sind.

Des Weiteren stellt Figur 8 Instabilitäten im Kennlinienverlauf dar, die sich durch Sprünge für die Leistungszahl λ manifestieren. Diesen Instabilitäten sind wiederum Unstetigkeiten bezüglich des durch die hydrodynamische Kupplung übertragenen Moments zugeordnet. Solche Instabilitäten treten bei geringen Füllmengen ab einer bestimmten Leistungszahl λ auf und stellen chaotische Bereiche dar. In Figur 8 ist zur Illustration für die Kennlinie 8 ein Instabilitätsbereich mit der Bezugsziffer 8.1 markiert. Gemäß dem Stand der Technik wird daher die füllungsgesteuerte hydrodynamische Kupplung mit begrenzten Leistungszahlen λ betrieben, in dem die Instabilitäten nicht auftreten können, das heißt es werden nur λ-Werte kleiner 1,8 im parabolischen Betrieb gewählt, wobei dieser Maximalwert für einen abnehmenden Füllungsgrad ebenfalls zu verringern ist.

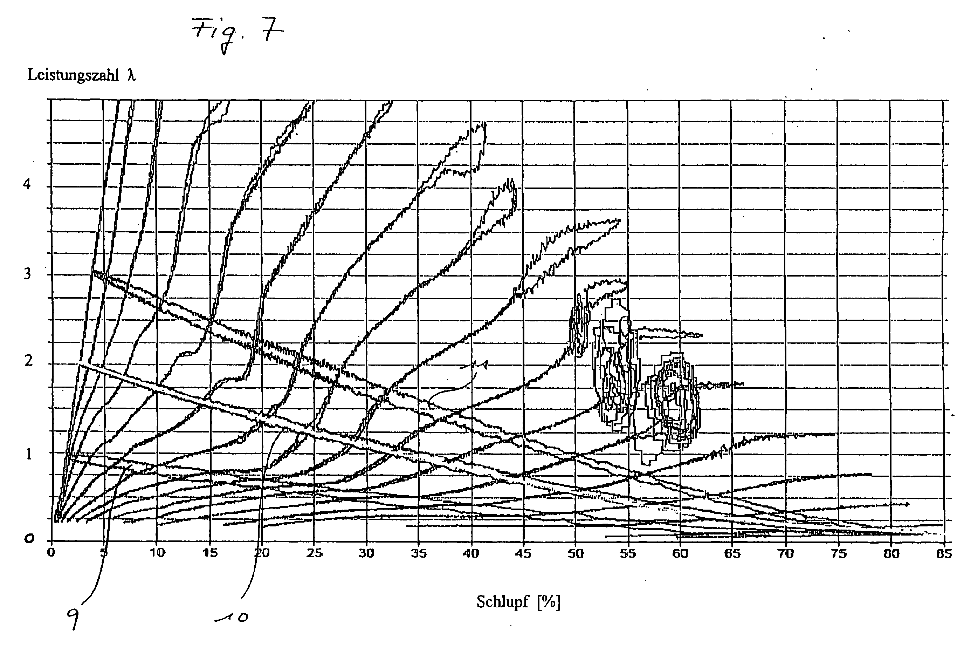

In Figur 7 ist das Figur 8 entsprechende Kennlinienfeld für eine erfindungsgemäß gestaltete hydrodynamische Kupplung dargestellt. Sichtbar ist, dass bei der Wahl eines asymmetrischen Profils die Hystereseeffekt und Sprünge im Kennlinienverlauf zwar weiterhin vorliegen, diese aber zu größeren λ-Werten hin verschoben sind. Hieraus resultiert die Möglichkeit eines erfindungsgemäßen Betriebsverfahrens für eine solchermaßen gestaltete Kupplung, welches darin besteht, für ein erwünschtes abtriebsseitiges Moment und eine gewünschte abtriebsseitige Drehzahl durch die Einstellung des Füllungsgrades einen gegenüber dem Stand der Technik höheren λ-Wert einzustellen. Bevorzugt wird hierbei eine Maximierung der λ-Werte, was gleichzusetzen ist mit der Verwendung möglichst kleinbauender füllungsgesteuerter hydrodynamischer Kupplungen. Aufgrund des erfindungsgemäß gewählten Profils ist es möglich, einen oberen λ-Wert ≥ 2 einzustellen und gleichzeitig einen stabilen und von Momentensprüngen freien Betrieb zu realisieren. Hierzu ist in Figur 7 eine für die vorliegende Baugröße der Kupplung üblich gewählte Begrenzung für die $\lambda$-Werte mit dem Bezugszeichen 9 versehen. Für die erfindungsgemäße Kupplung können nun die mit den Bezugzeichen 10 oder 11 bezeichneten oberen Schranken für die $\lambda$-Werte gewählt werden.

**Patentansprüche**

1. Füllungsgesteuerte hydrodynamische Kupplung (1), umfassend

     1.1 wenigstens ein Primärrad (2) und wenigstens ein Sekundärrad (3), welche einen torusförmigen mit Betriebsmittel füllbaren Arbeitsraum (4) bilden;
     1.2 eine Zufuhrleitung für die Zufuhr von Betriebsmittel zum Arbeitsraum;
     1.3 eine Einrichtung zur Einstellung des Füllungsgrads des Arbeitsraums (4) mit Betriebsmittel; **dadurch gekennzeichnet, dass**
     1.4 das Primärrad (2) und das Sekundärrad (3) zueinander asymmetrisch ausgebildet sind, wobei das vom Sekundärrad (3) abgegrenzte Teilvolumen des Arbeitsraums (4) kleiner ist als das vom Primärrad (2) abgegrenzte Teilvolumen; und
     1.5 wobei der vom Primärrad (2) gebildete Teilbereich des Arbeitsraums (4) eine primärseitige axiale Erstreckung ($B_P$) aufweist, die größer ist als die sekundärseitige axiale Erstreckung ($B_T$) des vom Sekundärrad (3) gebildeten Teilbereichs des Arbeitsraums (4).

2. Füllungsgesteuerte hydrodynamische Kupplung nach Anspruch 1, **dadurch gekennzeichnet, dass** der Innendurchmesser ($DI_T$) des Sekundärrads (3) größer ist als der Innendurchmesser ($DI_P$) des Primärrads (2).

3. Füllungsgesteuerte hydrodynamische Kupplung nach einem der Ansprüche 1 oder 2, **dadurch gekennzeichnet, dass** das Sekundärrad (3) gegenüber dem Primärrad (2) zusätzliche Leitflächen (6) aufweist, die sich vom Torusgrund zum Innendurchmesser hin erstrecken.

4. Füllungsgesteuerte hydrodynamische Kupplung nach einem der Ansprüche 1 -3, **dadurch gekennzeichnet, dass** das Sekundärrad (3) im Torusgrund zwischen zwei Schaufeln wenigstens eine Störkante (20.1 - 20.n) umfasst.

5. Füllungsgesteuerte hydrodynamische Kupplung nach Anspruch 4, **dadurch gekennzeichnet, dass** eine Vielzahl von Störkanten (20.1 - 20.n) verwendet wird, wobei diese auf unterschiedliche Durchmesserbereiche Ds des Sekundärrads (3) verteilt sind.

6. Füllungsgesteuerte hydrodynamische Kupplung nach einem der Ansprüche 4 oder 5, **dadurch gekennzeichnet, dass** die Störkante mit dem Torusgrund des Sekundärrads (3) verschraubt ist oder mit diesem einteilig ausgebildet ist.

**Claims**

1. A filling-controlled hydrodynamic coupling (1), comprising

     1.1 at least one primary wheel (2) and at least one secondary wheel (3) which form a toroidal working chamber which can be filled with operating medium;
     1.2 a feed line for the supply of operating medium to the working chamber;
     1.3 a device for setting the degree of filling of the working chamber (4) with operating medium, **characterized in that**
     1.4 the primary wheel (2) and the secondary wheel (3) are arranged to be asymmetrical with respect to each other, with the partial volume of the working chamber (4) which is delimited by the secondary wheel (3) being smaller than the partial volume delimited by the primary wheel (2), and
     1.5 with the partial area of the working chamber (4) formed by the primary wheel (2) having a primary-side axial extension ($B_P$) which is larger than the secondary-side axial extension ($B_T$) of the partial area of the working chamber (4) formed by the secondary wheel (3).

2. A filling-controlled hydrodynamic coupling according to claim 1, **characterized in that** the inside diameter ($DI_T$) of the secondary wheel (3) is larger than the inside diameter ($DI_P$) of the primary wheel (2).

3. A filling-controlled hydrodynamic coupling according to one of the claims 1 or 2, **characterized in that** the secondary wheel (3) comprises additional guide surfaces (6) in relation to the primary wheel (2), which guide surfaces extend from the base of the torus towards the inside diameter.

4. A filling-controlled hydrodynamic coupling according to one of the claims 1 to 3, **characterized in that** the secondary wheel (3) comprise at least one interference edge (20.1 to 20.n) in the base of the torus between two blades.

5. A filling-controlled hydrodynamic coupling according to claim 4, **characterized in that** a plurality of interference edges (20.1 to 20.n) are used, with the same being distributed among different diameter regions Ds of the secondary wheels (3).

6. A filling-controlled hydrodynamic coupling according to one of the claims 4 or 5, **characterized in that** the interference edge is screwed together with the base of the torus of the secondary wheel (3) or is arranged in an integral fashion with the same.


**Revendications**

1. Embrayage hydrodynamique régulé par remplissage (1) comprenant

> 1.1 au moins une roue primaire (2) et au moins une roue secondaire (3), lesquelles constituent une chambre de travail (4) en forme de tore pouvant être remplie de fluide ;
> 1.2 une conduite d'alimentation pour l'alimentation de ladite chambre de travail ;
> 1.3 un dispositif pour réguler le degré de remplissage de ladite chambre de travail (4) en fluide ; **caractérisé en ce**ci que
> 1.4 ladite roue primaire (2) et ladite roue secondaire (3) sont constituées de manière asymétrique l'une par rapport à l'autre, le volume partiel de ladite chambre de travail (4) délimité par ladite roue secondaire (3) étant inférieur au volume partiel délimité par ladite roue primaire (2) ; et
> 1.5 l'espace partiel de ladite chambre de travail (4) formé par ladite roue primaire (2) présentant du côté primaire une extension axiale ($B_P$) laquelle est plus grande que l'extension axiale ($B_T$) du côté secondaire de l'espace partiel de ladite chambre de travail (4) constitué par ladite roue secondaire (3).

2. Embrayage hydrodynamique régulé par remplissage selon la revendication 1, **caractérisé en ce**ci que le diamètre intérieur ($DI_T$) de ladite roue secondaire (3) est plus grand que le diamètre intérieur ($DI_p$) de ladite roue primaires (2).

3. Embrayage hydrodynamique régulé par remplissage selon l'une des revendications 1 ou 2, **caractérisé en ce**ci que ladite roue secondaire (3) présente par rapport à ladite roue primaire (2) des surfaces de guidage (6) supplémentaires, lesquelles s'étendent du fond du tore vers le diamètre intérieur.

4. Embrayage hydrodynamique régulé par remplissage selon l'une des revendications 1 à 3, **caractérisé en ce**ci que ladite roue secondaire (3) comporte au fond du tore au moins une arête saillante (20.1 - 20.n) entre deux ailettes.

5. Embrayage hydrodynamique régulé par remplissage selon la revendication 4, **caractérisé en ce**ci qu'un grand nombre d'arêtes saillantes (20.1 - 20.n) est utilisé, lesdites arrêtes saillantes étant réparties sur des zones diverses du diamètre Ds de ladite roue secondaires (3).

6. Embrayage hydrodynamique régulé par remplissage selon l'une des revendications 4 ou 5, **caractérisé en ce**ci que ladite arête saillante peut être vissée au fond du tore de ladite roue secondaire (3) ou est constituée d'une seule pièce avec celui-ci.

Fig. 1

Fig. 2

Fig. 3

Fig. 4

EP 2 041 445 B1

**Fig. 5**

**Fig. 6**

Fig. 7

Leistungszahl λ

Schlupf [%]

9

10

EP 2 041 445 B1

Fig 8

Leistungszahl λ

Schlupf [%]

**EP 2 041 445 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- NL 6613319 A
- DE 19706652 A1
- DE 10251970 A1